# EUROPEAN PATENT APPLICATION

(11) **EP 4 486 068 A1**
(43) Date of publication of application: **01.01.2025**
(21) Application number: 23759618.4
(22) Date of filing: 02.02.2023
(51) Int. Cl.: H05B 47/155, H05B 45/20, H05B 45/325, H05B 45/345, H05B 45/375, H05B 45/38, H05B 47/18

(54) **ILLUMINATION SYSTEM**

(30) Priority: 22.02.2022 JP 2022026094
(71) Applicant: Panasonic Intellectual Property Management Co., Ltd., Kadoma-shi, Osaka 571-0057 (JP)
(72) Inventor: MATSUBAYASHI, Yoko, Kadoma-shi, Osaka 571-0057 (JP); TAKEMOTO, Emi, Kadoma-shi, Osaka 571-0057 (JP); OKAMOTO, Ryo, Kadoma-shi, Osaka 571-0057 (JP)
(74) Representative: Appelt, Christian W.
(86) International application number: PCT/JP2023/003363
(87) International publication number: WO 2023/162612

(57) **Abstract**

An object of the present disclosure is to implement gradation rendering illumination of colors with increased vividness. An illumination system (A1) includes a first light source unit (1), a second light source unit (2), a first driver (3A), a second driver (3B), and a controller (4). The first light source unit (1) is configured to irradiate an irradiation surface with first illumination light (L1) of a chromatic color, a quantity and a color of the first illumination light (L1) being variable. The second light source unit (2) is configured to irradiate the irradiation surface with second illumination light (L2) different from the first illumination light (L1), a quantity and a color of the second illumination light (L2) being variable. The first light source unit (1) and the second light source unit (2) are configured such that at least part of an irradiation range of the first illumination light (L1) overlaps an irradiation range of the second illumination light (L2) on the irradiation surface. A chromaticity (chromaticity point C1) of the first illumination light (L1) is apart from a chromaticity of an equi-energy white point by more than or equal to 50 step (50-step ellipse D1) in a MacAdam ellipse.

## Description

### Technical Field

The present disclosure relates to illumination systems and more specifically relates to an illumination system for providing illumination for a rendering.

### Background Art

As a conventional example, an illumination device described in Patent Literature 1 is shown. The illumination device described in Patent Literature 1 includes: a lamp including a first light source unit and a second light source unit; and a power supply device configured to cause the first light source unit and the second light source unit to light independently of each other. The first light source unit is configured to emit light of an incandescent color from its light emission part having a circular shape. The second light source unit is disposed as a ring at an outer perimeter of the first light source unit and is configured to emit light of a color (a daylight or neutral white color) different from the incandescent color. The power supply device includes: a power supply unit configured to supply electric power to the first light source unit and the second light source unit independently of each other; and a controller configured to adjust the electric power to be supplied from the power supply unit to each of the light source units.

Thus, the illumination device of the conventional example can render its luminance lower in gradation from a first irradiation area of the first light source unit toward a second irradiation area, located around the first irradiation area, of the second light source unit. Note that light colors of the first light source unit and the second light source unit in the illumination device of the conventional example are both whitish light colors (neutral white, daylight, white, warm white, or incandescent colors) and are achromatic colors or low-chromatic colors.

Incidentally, rendering illumination provided by gradation illumination using light of a chromatic color or high-chromatic color is recently desired.

### Citation List

### Patent Literature

Patent Literature 1: JP 2015-162407 A

### Summary of Invention

It is an object of the present disclosure to provide an illumination system configured to implement gradation rendering illumination of colors with increased vividness.

An illumination system according to an aspect of the present disclosure includes a first light source, a second light source, a first driver, a second driver, and a controller. The first light source is configured to irradiate an irradiation surface with first illumination light of a chromatic color, and a quantity and a color of the first illumination light are variable. The second light source is configured to irradiate the irradiation surface with second illumination light different from the first illumination light, and a quantity and a color of the second illumination light are variable. The first driver is configured to drive the first light source such that the quantity and the color of the first illumination light respectively match a first light quantity target value and a first light color target value. The second driver drives the second light source such that the quantity and the color of the second illumination light respectively match a second light quantity target value and a second light color target value. The controller is configured to give the first light quantity target value and the first light color target value to the first driver and give the second light quantity target value and the second light color target value to the second driver. The first light source and the second light source are configured such that at least part of an irradiation range of the first illumination light overlaps an irradiation range of the second illumination light on the irradiation surface. A chromaticity of the first illumination light is apart from a chromaticity of an equi-energy white point by more than or equal to 50 steps in a MacAdam ellipse.

### Brief Description of Drawings

FIG. 1 is a system configuration diagram of an illumination system according to an embodiment of the present disclosure;
FIG. 2A is a luminous intensity distribution curve of a luminous intensity distribution characteristic of a first light source unit in the illumination system;
FIG. 2B is a luminous intensity distribution curve of a luminous intensity distribution characteristic of a second light source unit in the illumination system;
FIG. 3 is an illustrative view of an installation situation of the illumination system;
FIG. 4 is a chromaticity diagram illustrating operation of the illumination system;
FIG. 5 is a chromaticity diagram illustrating the operation of the illumination system; and
FIG. 6 is a view of a color circle illustrating the operation of the illumination system.

### Description of Embodiments

An illumination system according to an embodiment of the present disclosure will be described in detail below with reference to the drawings. Note that the drawings to be referred to in the following description of embodiment are schematic representations. Thus, the sizes and thicknesses of the respective constituent elements illustrated on those drawings are not always to scale, compared with actual ones. Note that configurations described in the following embodiment are mere examples of the present disclosure. The present disclosure is not limited to the following embodiment but may be modified in various manners depending on design or the like as long as the object of the present disclosure is achieved.

### (1) Overview

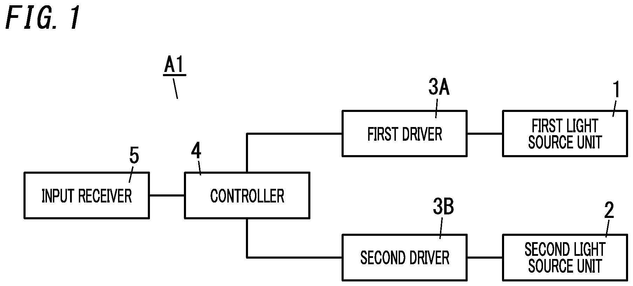

An illumination system A1 according to the embodiment includes a first light source (first light source unit 1), a second light source (second light source unit 2), a first driver 3A, a second driver 3B, and a controller 4 (see FIG. 1).

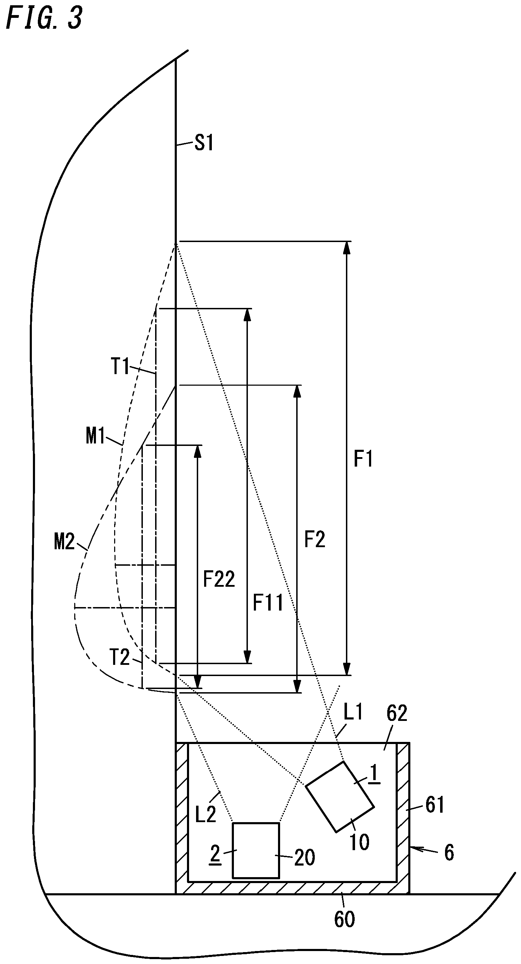

The first light source unit 1 irradiates an irradiation surface S1 with first illumination light L1 of a chromatic color, and the quantity and the color of the first illumination light L1 are variable. The second light source unit 2 irradiates the irradiation surface S1 with second illumination light L2 different from the first illumination light L1, and the quantity and the color of the second illumination light L2 are variable (see FIG. 3).

The first driver 3A controls the first light source unit 1 such that the quantity and the color of the first illumination light L1 respectively match a first light quantity target value and a first light color target value. The second driver 3B controls the second light source unit 2 such that the quantity and the color of the second illumination light L2 respectively match a second light quantity target value and a second light color target value.

The controller 4 gives the first light quantity target value and the first light color target value to the first driver 3A and gives the second light quantity target value and the second light color target value to the second driver 3B.

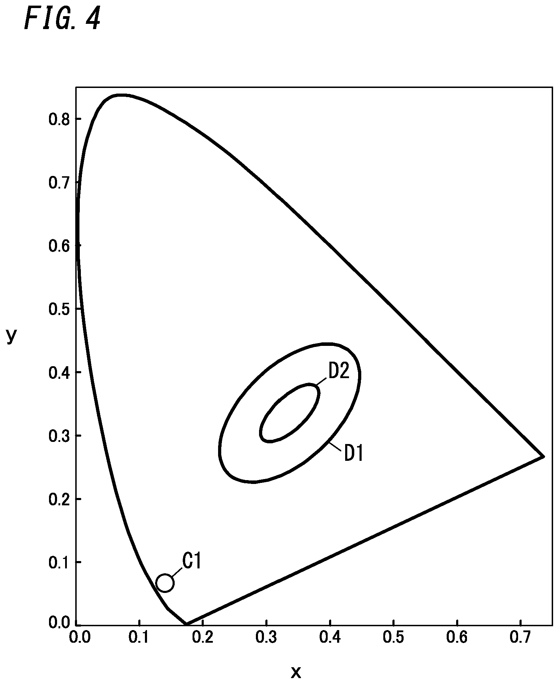

A chromaticity of the first illumination light L1 is apart from a chromaticity of an equi-energy white point by more than or equal to 50 steps in a MacAdam ellipse (see FIG. 4).

The illumination system A1 according to the embodiment is used for purposes of providing rendering illumination (gradation illumination) onto the irradiation surface S1 which is, for example, an inner wall surface of passenger carriages of rail vehicles, a wall surface of customer rooms of accommodation facilities, a wall surface of corridors of commercial facilities, a wall surface of other places which are often viewed by people, or, for example, a ceiling surface thereof. The rendering illumination provided by the illumination system A1 according to the embodiment is not simple indirect illumination but is illumination for rendering a space including the irradiation surface S1 comfortable by providing gradation illumination by using the first illumination light L1 and the second illumination light L2 on the irradiation surface S1.

Thus, the illumination system A1 according to the embodiment can implement gradation rendering illumination of colors with increased vividness as compared with, for example, the conventional example using illumination light of an achromatic or low-chromatic color (light color). Note that the chromaticity range of some, the neutral white, daylight, white, and warm white colors, of the whitish light colors (neutral white, daylight, white, warm white, and incandescent colors) used in the conventional example is generally included in a range within less than 50 step from the chromaticity of the equi-energy white point in the MacAdam ellipse.

### (2) Details

As shown in FIG. 1, the illumination system A1 according to the embodiment (hereinafter referred to simply as an illumination system A1) includes the first light source unit 1, the second light source unit 2, the first driver 3A, the second driver 3B, the controller 4, and an input receiver 5.

### (2-1) First Light Source Unit

The first light source unit 1 includes four types of light-emitting diodes (LEDs) different from one another in terms of light color, for example, a plurality of LEDs of each of four colors, red (R), green (G), blue (B), and white (W). Note that the LEDs included in the first light source unit 1 are not limited to LEDs of four, R, G, B, and W, colors but may be one or more types of LEDs of a color(s) (e.g., high chroma blue) other than the three colors, namely, R, G, and B, or W. The plurality of LEDs of each color are preferably electrically connected in series for each color and mounted on a substrate. Note that in the following description, a plurality of LEDs of the same color mounted on the substrate may collectively be referred to as a red LED module, a green LED module, a blue LED module, and a white LED module, for example.

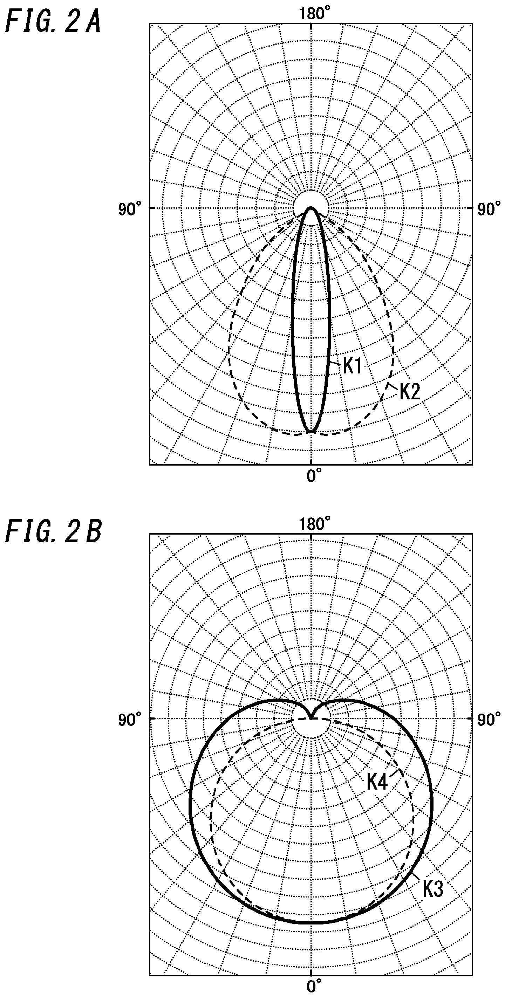

Moreover, the first light source unit 1 includes a lens block. The lens block includes, for example, a linear Fresnel lens formed from a synthetic resin, such as an acrylic resin or a polycarbonate resin, having a light transmitting property. Thus, light rays from the LED modules of the respective colors are concentrated and mixed by the linear Fresnel lens, thereby providing light (the first illumination light L1) of a color according to the ratio of the quantities of the light of the respective colors. Note that the luminous intensity distribution characteristic of the first light source unit 1 is a narrow-angle luminous intensity distribution characteristic as shown by luminous intensity distribution curves K1 and K2 (K1: luminous intensity distribution curve in the gravity direction, K2: luminous intensity distribution curve in the horizontal direction) in FIG. 2A. Note that the lens block may include a plurality of lenses corresponding to the plurality of LEDs of the LED modules of the respective colors on a one-to-one basis alternatively to the linear Fresnel lens. Alternatively, the first light source unit 1 may impart a light scattering property to the lens block to enhance a color rendering property for each color or may include a diffusion sheet.

Moreover, the first light source unit 1 includes a housing 10 made of metal or made of a synthetic resin (see FIG. 3). The housing 10 has a box shape having one surface having an opening. The LED modules of the four colors are housed in the housing 10 such that the LEDs face the opening surface. The lens block is attached to the housing 10 to close the opening surface. Note that the lens block may be attached to be displaceable with respect to the housing 10.

### (2-2) Second Light Source Unit

Similarly to the first light source unit 1, the second light source unit 2 includes four types of LEDs different from one another in terms of light color, for example, a plurality of LEDs of each of four colors, R, G, B, and W. Note that the LEDs included in the second light source unit 2 may be LEDs of light colors different from the light colors of the LEDs included in the first light source unit 1 and may include one or more types of LEDs of a color(s) (e.g., high chroma blue) other than the three colors, namely, R, G, and B, or W. The plurality of LEDs of each color are preferably electrically connected in series for each color and mounted on a substrate. Note that in the following description, a plurality of LEDs of the same color mounted on the substrate may collectively be referred to as a red LED module, a green LED module, a blue LED module, and a white LED module, for example.

Moreover, the second light source unit 2 includes a diffusion sheet formed from a synthetic resin, such as an acrylic resin or a polycarbonate resin, having a light transmitting property. Thus, light rays from the LED modules of the respective colors are diffused and mixed by the diffusion sheet, thereby providing light (second illumination light L2) of a color according to the ratio of the quantities of the light of the respective colors. Note that the luminous intensity distribution characteristic of the second light source unit 2 is a wide-angle luminous intensity distribution characteristic as shown by luminous intensity distribution curves K3 and K4 (K3: luminous intensity distribution curve in the gravity direction, K4: luminous intensity distribution curve in the horizontal direction) in FIG. 2B. Note that similarly to the first light source unit 1, the second light source unit 2 may include a lens block. The lens block preferably includes a plurality of lenses corresponding to the plurality of LEDs included in the LED modules of the respective colors on a one-to-one basis.

Moreover, the second light source unit 2 includes a housing 20 made of metal or made of a synthetic resin (see FIG. 3). The housing 20 has a box shape having one surface having an opening. The LED modules of the four colors are housed in the housing 20 such that the LEDs face the opening surface. The lens block is attached to the housing 20 to close the opening surface. Note that the lens block may be attached to be displaceable with respect to the housing 20.

### (2-3) First Driver

The first driver 3A includes: a power conversion circuit configured to convert alternating-current power supplied from a power system for commercial use into direct-current power; and four constant current circuits, for example.

The power conversion circuit includes, for example, a full-wave rectifier circuit such as a diode bridge, a step-up chopper circuit, and a smoothing capacitor. The power conversion circuit converts an alternating-current voltage (e.g., an alternating-current voltage having a power supply frequency of 60 Herz and an effective value of 100 V) received from the power system into a direct-current voltage higher than a peak voltage of the alternating-current voltage.

The four constant current circuits all have the same circuit configuration. Each constant current circuit preferably includes, for example, a back converter such as a step-down chopper circuit. Each constant current circuit includes a back converter configured to step down the direct-current voltage output from the power conversion circuit and operates to cause an output current to be supplied to the LED modules to match a target current value. For example, the constant current circuit may receive a digital signal compliant with the communication protocol of a digital multiplex (DMX) 512 from the controller 4 and may control the back converter in accordance with the digital signal. Alternatively, each constant current circuit may adjust the output current by performing pulse width modulation (PWM) control of the back converter in accordance with the first light quantity target value and the first light color target value given by the controller 4 as described later.

The first driver 3A is electrically connected to the first light source unit 1, for example, via four electric cables. The four electric cables electrically connect respective output terminals of the four constant current circuits of the first driver 3A to input terminals of the four LED modules of the first light source unit 1.

### (2-4) Second Driver

Similarly to the first driver 3A, the second driver 3B includes: a power conversion circuit configured to convert alternating-current power supplied from a power system for commercial use into direct-current power; and four constant current circuits. The power conversion circuit and the four constant current circuits included in the second driver 3B have the same circuit configurations as those of the power conversion circuit and the four constant current circuits included in the first driver 3A, and the description thereof is therefore omitted.

The second driver 3B is electrically connected to the second light source unit 2, for example, via four electric cables. The four electric cables electrically connect respective output terminals of the four constant current circuits of the second driver 3B to input terminals of the four LED modules of the second light source unit 2.

### (2-5) Controller

The controller 4 includes, for example, microcontroller and memory and is configured to execute later-described various processes by the microcontroller executing a program stored in the memory.

The controller 4 gives the first light quantity target value and the first light color target value to the first driver 3A and gives the second light quantity target value and the second light color target value to the second driver 3B.

The first light quantity target value and the first light color target value of the first illumination light are converted into dimming values of the four LED modules and are further converted into target current values of the four constant current circuits of the first driver 3A. For example, a case is assumed in which the first light quantity target value is 500 lm, and the luminous flux ratio of the four LED modules to the first light color target value is 30%(R):40%(G):20%(B): 10%(W). The relationship between a forward current and a luminous flux characteristic differs for each LED module, and therefore, when conversion factors of the red, green, blue and white LED modules are respectively set to 1.32, 0.75, 1.22, and 0.46, the target current value of the constant current circuit corresponding to the red LED module is 500 lm × 30% × 1.32 = 198 mA. Similarly, the target current value of the constant current circuit to the green LED module is 500 lm × 40% × 0.75 = 150 mA. Hereafter, the target current values of the constant current circuits corresponding to the blue and white LED modules are likewise 122 mA and 23 mA, respectively.

The second light quantity target value and the second light color target value of the second illumination light are converted into dimming values of the four LED modules and are further converted into target current values of the four constant current circuits of the second driver 3B. For example, a case is assumed in which the second light quantity target value is 800 lm and the luminous flux ratio of the four LED modules to the first light color target value is 20%(R):30%(G):40%(B):10%(W). In this case, the target current value of the constant current circuit corresponding to the red LED module is 500 lm × 20% × 1.32 = 132 mA. Similarly, the target current value of the constant current circuit to the green LED module is 500 lm × 30% × 0.75 = 112.5 mA. Hereafter, the target current values of the constant current circuits corresponding to the blue and white LED modules are likewise 244 mA and 23 mA, respectively.

Thus, the controller 4 gives the target current value of each constant current circuit calculated as described above to the first driver 3A as the first light quantity target value and the first light color target value and to the second driver 3B as the second light quantity target value and the second light color target value. Note that when the constant current circuit is to be subjected to PWM control, the controller 4 may convert the target current values into a duty ratio of the PWM control necessary for causing an average value per unit time of the output current of each constant current circuit to match a corresponding one of the target current values, and the controller 4 may give the duty ratio to the first driver 3A and the second driver 3B.

### (2-6) Input Receiver

The input receiver 5 receives inputs which specify the first light quantity target value and the first light color target value. Moreover, the input receiver 5 receives an input for selecting a virtual line segment G1 of a chromaticity diagram which will be described later.

The input receiver 5 includes, for example, a general-purpose computer system. Here, the general-purpose computer system may be a so-called desktop or laptop personal computer or a tablet computer including an input device such as a touch panel mounted on a plate-shaped housing.

The input receiver 5 may display, for example, a chromaticity diagram (e.g., an xy chromaticity diagram of a XYZ chromatic system) on a monitor screen and receives an arbitrary chromaticity point selected by a mouse pointer, a stylus, or a fingertip as the input which specifies the first light color target value. Moreover, the input receiver 5 may display, for example, a graphical user interface (GUI) such as a fader or a slider on the monitor screen and receives an arbitrary numerical value selected by an operation given by a mouse pointer, a stylus, or a fingertip as the input which specifies the first light quantity target value. Note that the input receiver 5 may receive the inputs which specify the first light quantity target value and the first light color target value via a physical keyboard or a character-based user interface (CUI) such as a virtual keyboard displayed on the monitor screen. Moreover, the input receiver 5 receives the chromaticity point selected from the chromaticity diagram on the monitor screen as an input which specifies an end point for determining the virtual line segment G1.

The input receiver 5 is, for example, compliant with a communication protocol such as DMX512 and is connected to the controller 4 via a communication line such that bidirectional communication is possible. Thus, the input receiver 5 transmits information on the input (xy coordinates of the selected chromaticity point, a numerical value of the fader or the like) thus received to the controller 4 via the communication line.

### (2-7) Installation of Illumination System

As shown in FIG. 3, the illumination system A1 is installed on an installation base 6 disposed at a lower portion of the irradiation surface S1 which is a wall surface or the like.

The installation base 6 includes a bottom plate 60 having a flat-plate shape and arranged perpendicular to the irradiation surface S1, a front plate 61 having flat-plate shape and protruding upward from one end (front end) in a short direction of the bottom plate 60, and a pair of side plates 62 protruding upward from both ends in a longitudinal direction of the bottom plate 60. That is, the installation base 6 has an elongated box shape having an opening above the bottom plate 60. Note that in FIG. 3, one side plate of the pair of side plates 62 is omitted. The bottom plate 60, the front plate 61, and the pair of side plates 62 are preferably made of a plate material of any of metal, wood, and a synthetic resin.

The first light source unit 1 is installed at a location closer to the front plate 61 than to the irradiation surface S1 in an internal space of the installation base 6 (a space surrounded by the bottom plate 60, the front plate 61, the pair of side plates 62, and the irradiation surface S1). Moreover, the first light source unit 1 is fixed to the pair of side plates 62 such that its optical axis is tilted toward the irradiation surface S1 with respect to a thickness direction (gravity direction) defined with respect to the bottom plate 60. Note that the first light source unit 1 may be installed on an inner bottom surface of the installation base 6 (an upper surface of the bottom plate 60) such that the opening surface (an exit surface of the first illumination light L1) of the housing 10 faces upward, and the lens block may be displaced (rotated) with respect to the housing 10 so that the optical axis is tilted toward the irradiation surface S1.

The second light source unit 2 is installed on the inner bottom surface of the installation base 6 such that the opening surface (an exit surface of the second illumination light L2) of the housing 20 faces upward. Note that the second light source unit 2 is installed at a location closer to the irradiation surface S1 than the first light source unit 1 is in the internal space of the installation base 6.

Here, on the irradiation surface S1, an irradiation range F1 of the first illumination light L1 is larger in the up/down direction (gravity direction) than an irradiation range F2 of the second illumination light L2 and partially overlaps the irradiation range F2 of the second illumination light L2 (see FIG. 3). Specifically, a first main irradiation range F11 in which an illuminance is higher than or equal to 30% when a maximum illuminance in the irradiation range F1 of the first illumination light L1 is 100% preferably overlaps at least part of a second main irradiation range F22 in which an illuminance is higher than or equal to 30% when a maximum illuminance in the irradiation range F2 of the second illumination light L2 is 100%. Note that in FIG. 3, a curved line M1 which is a dashed line shows the illuminance distribution of the first illumination light L1 on the irradiation surface S1, and a curved line M2 which is a long dashed double-short dashed line shows the illuminance distribution of the second illumination light L2 on the irradiation surface S1. Moreover, in FIG. 3, straight lines T1 and T2 each of which is a long dashed short dashed line show lines at which illuminances of the first illumination light L1 and the second illumination light L2 are 30%, respectively.

As described above, the first main irradiation range F11 of the first light source unit 1 and the second main irradiation range F22 of the second light source unit 2 at least partially overlap each other, thereby making a peak of the first illumination light L1 and a peak of the second illumination light L2 on the irradiation surface S1 to be easily perceived as one peak. As a result, the illumination system A1 can improve a visual quality of gradation illumination on the irradiation surface S1 as compared with the case where the peak of the first illumination light L1 and the peak of the second illumination light L2 on the irradiation surface S1 are separately perceived.

### (2-8) Setting of Illumination System

Next, a setting procedure of the gradation illumination in the illumination system A1 will be described. Setting information on a scene (hereinafter referred to as scene data) set by a setting procedure described below is stored in the memory of the controller 4. Note that the "scene" as used in the following description shows gradation illumination implemented by irradiation of the irradiation surface S1 with the first illumination light L1 and the second illumination light L2 set by setting work. Moreover, the "scene data" is a combination of the first light quantity target value and the first light color target value of the first illumination light L1 and the second light quantity target value and the second light color target value of the second illumination light L2.

### (2-8-1) Setting of First Illumination Light

A worker who carries out the setting work (hereinafter referred to simply as a worker) first sets the first light quantity target value and the first light color target value of the first illumination light L1. Note that the worker preferably carries out setting work of the first light quantity target value and the first light color target value while the worker visually observes the first illumination light L1 irradiated from the first light source unit 1 onto the irradiation surface S 1. Alternatively, the worker may carry out the setting work of the first light quantity target value and the first light color target value while the worker causes a situation when the irradiation surface is irradiated with the first illumination light to be reproduced on a monitor screen of a computer system.

The worker sets a first light quantity target value and a first light color target value which are necessary for reproduction of, for example, a scene corresponding to the look of the sky, such as a blue sky or a rosy sky, or a scene corresponding to a natural environment, such as a forest, a deep ocean, and a clear stream. To set a scene of a blue sky, the worker selects a blue chromaticity point C1 on a chromaticity diagram displayed on the monitor screen. Here, in the chromaticity diagram on the monitor screen, a curved line (hereinafter referred to as a "50-step ellipse") D1 connecting chromaticity points apart from the chromaticity of the equi-energy white point by 50 steps in the MacAdam ellipse is displayed (see FIG. 4). Note that the 50-step ellipse D1 is defined by the ellipsoid equation, where the center coordinates are (0.3333, 0.3333), the semi-major axis is (0.1174), the semi-minor axis is (0.0481), and the angle θ [deg] between the major axis and the x axis is (58.9840). That is, the 50-step ellipse D1 substantially matches the area expressed as "(-ish) white" shown in reference drawing 1 "general chromaticity classification according to system color names" attached to Japanese industry standard JIS Z8110-1995. Colors of light which are within the 50-step ellipse D1 are light to such an extent that the chromaticness is only slightly perceived, and thus, a person difficultly images such light as light with chromaticness. Therefore, the worker selects a chromaticity point, with high chromaticness, outside the area of the 50-step ellipse D1, thereby efficiently implementing gradation illumination with appropriate chromaticness. Thus, the illumination system A1 displays the 50-step ellipse D1 on the chromaticity diagram on the monitor screen, thereby guiding the worker to select a chromaticity point which is appropriate for a light color combination and which is located outside the 50-step ellipse D1.

After the worker selects the chromaticity point C1, the worker gives an operation to the fader displayed on the monitor screen to select a quantity of light (an arbitrary numerical value from 0% to 100%). Then, the chromaticity coordinates of the chromaticity point C1 and the quantity of light selected by the worker are received by the input receiver 5. The controller 4 determines, based on the chromaticity coordinates of the chromaticity point C1 and the quantity of the light received by the input receiver 5, the first light quantity target value and the first light color target value of the first illumination light L1.

### (2-8-2) Setting of Second Illumination Light

Subsequently, the worker sets the second light quantity target value and the second light color target value of the second illumination light L2. Note that the color of the second illumination light L2 is preferably a color of a chromaticity point which is not in a complementary color relationship with the first illumination light L1. The complementary color relationship is a relationship in which in a combination of colors located directly opposite each other in the color circle, the contrast of the colors is strong, and at a point at which the chromaticnesses of the two colors intersect with substantially equal level, a dusky state of an achromatic color from which no chromaticness is perceived is recognized. The inventors have confirmed that when the first illumination light L1 and the second illumination light L2 are in the complementary color relationship, a sense of gradation with appropriate chromaticness cannot be provided on the irradiation surface S1.

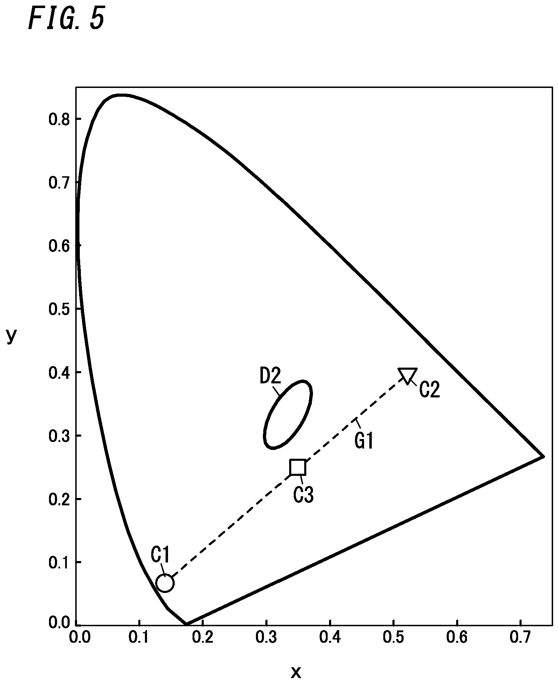

The input receiver 5 displays, on the chromaticity diagram, a virtual line segment G1 which connects the chromaticity (chromaticity point C1) of the first illumination light L1 selected by the worker to an arbitrary chromaticity (chromaticity point C2) of the second illumination light L2 and which is apart from the chromaticity of the equi-energy white point by more than or equal to 25 steps in the MacAdam ellipse (see FIG. 5). In this embodiment, a curved line connecting to each other chromaticity points apart from the chromaticity of the equi-energy white point by 25 steps in the MacAdam ellipse is referred to as a 25-step ellipse D2 (see FIG. 5). The 25-step ellipse D2 is defined by the ellipsoid equation, where the center coordinates are (0.3333, 0.3333), the semi-major axis is (0.0587), the semi-minor axis is (0.0240), and the angle θ [deg] between the major axis and the x axis is (58.9840). That is, the 25-step ellipse D2 substantially matches the "white" area shown in reference drawing 1 "general chromaticity classification according to system color names" attached to Japanese industry standard JIS Z8110-1995. Thus, a combination of chromaticities connected to each other by a line segment part of which lies in the area of the 25-step ellipse D2 is considered to be in the complementary color relationship, whereas a combination of chromaticities on the line segment G1 which does not intersect the area of the 25-step ellipse D2 is a combination of chromaticities which gives no image of a white color (achromatic color).

Thus, the illumination system A1 has the advantage that the worker selects a chromaticity point C3 on a line segment G1 displayed on the chromaticity diagram by the input receiver 5, thereby causing an observer to feel a sense of gradation with continuous chromaticness by the gradation illumination on the irradiation surface S1.

Here, the controller 4 adjusts the quantity of the second illumination light L2 in accordance with the distance (color difference) between the chromaticity point C3 of the second illumination light L2 and the chromaticity point C1 of the first illumination light L1 received by the input receiver 5. For example, the controller 4 increases the quantity of the second illumination light L2 as the color difference between the two chromaticity points C1 and C3 increases, and the controller 4 reduces the quantity of the second illumination light L2 as the color difference between the two chromaticity points C1 and C3 decreases. That is, the controller 4 coordinates the second light quantity target value and the second light color target value with each other which are to be given to the second driver 3B.

That is, when the illumination system A1 increases the quantity of the second illumination light L2 as the color difference between the two chromaticity points C1 and C3 increases, the illumination system A1 enables gradation illumination to be implemented which causes the chromaticness of the color of the first illumination light L1 and the chromaticness of the color of the second illumination light L2 to be strongly perceived. On the other hand, when the illumination system A1 reduces the quantity of the second illumination light L2 as the color difference between the two chromaticity points C1 and C3 decreases, the illumination system A1 enables gradation illumination to be implemented which causes the chromaticness of the first illumination light L1 to be strongly perceived.

Thus, the chromaticity coordinates of the chromaticity point C3 on the line segment G1 selected by the worker are received by the input receiver 5, and the quantity of the second illumination light L2 according to the color difference between the chromaticity point C3 and the chromaticity point C1 of the first illumination light L1 is received by the input receiver 5. The controller 4 determines, based on the chromaticity coordinates of the chromaticity point C3 and the light quantity received by the input receiver 5, the second light quantity target value and the second light color target value of the second illumination light L2. Then, the controller 4 stores the first light quantity target value and the first light color target value of the first illumination light L1 and the second light quantity target value and the second light color target value of the second illumination light L2 as the scene data in the memory. Note that, preferably, the controller 4 assigns an inherent identification code (e.g., 2-digit scene number) to each of a plurality of scenes to distinguish the scenes from each other and stores the scene numbers and respective pieces of scene data of the scene numbers in association with each other in the memory.

By the setting procedure described above, the setting work of the gradation illumination in the illumination system A1 is completed.

### (2-9) Operation of Illumination System

Next, operation of the illumination system A1 will be described.

A user who uses the illumination system A1 gives an operation to the input receiver 5 to select an arbitrary scene number. When the input receiver 5 receives an input of the scene number selected by the user, the input receiver 5 informs the controller 4 of the scene number thus received. The controller 4 reads, from the memory, a piece of scene data corresponding to the scene number informed from the input receiver 5 and calculates, based on the piece of scene data thus read, a target current value of each constant current circuit or a duty ratio for performing the PWM control of each constant current circuit. Moreover, the controller 4 gives the target current value (or duty ratio) of each constant current circuit thus calculated to the first driver 3A and the second driver 3B.

The first driver 3A drives the first light source unit 1 in accordance with the target current value (or duty ratio) of each constant current circuit given from the controller 4 and irradiates the irradiation surface S1 with first illumination light L1 which matches the first light quantity target value and the first light color target value. Similarly, the second driver 3B drives the second light source unit 2 in accordance with the target current value (or duty ratio) of each constant current circuit given from the controller 4 and irradiates the irradiation surface S1 with second illumination light L2 which matches the second light quantity target value and the second light color target value. As a result, the main irradiation range F11 of the first illumination light L1 and the main irradiation range F22 of the second illumination light L2 partially overlap, and are mixed with, each other on the irradiation surface S1, thereby implementing gradation illumination.

### (3) Variations

In the illumination system A1, the first light source unit 1 and the second light source unit 2 may be housed in a single housing. In the illumination system A1, housing the first light source unit 1 and the second light source unit 2 in the single housing enables the workability of installation work of the first light source unit 1 and the second light source unit 2 to be enhanced.

Moreover, in the illumination system A1, at least one of the first light source unit 1 or the second light source unit 2 may be installed above the irradiation surface S1.

Moreover, the input receiver 5 may display a uniform-chromaticity-scale diagram (e.g., u', v' chromaticity diagram), alternatively to the xy chromaticity diagram of the XYZ chromatic system, on the monitor screen to receive an input. That is, the uniform-chromaticity-scale diagram has a higher degree of equality between the distance on the chromaticity diagram and the actual color difference than the xy chromaticity diagram. Thus, the illumination system A1 uses the uniform-chromaticity-scale diagram, thereby enhancing the workability of work of inputting the first light color target value and the second light color target value by using the input receiver 5.

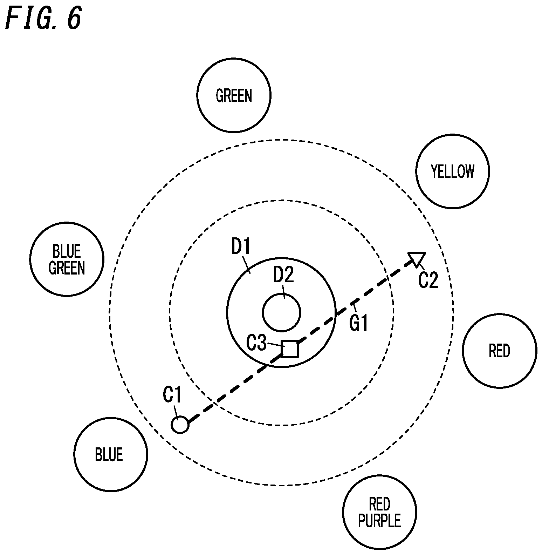

Note that the controller 4 may implement gradation illumination by giving each target value to the first driver 3A and the second driver 3B in real time instead of storing the first light quantity target value, the first light color target value, the second light quantity target value, and the second light color target value as the scene data in the memory. Moreover, the input receiver 5 may display, on the monitor screen, a color circle in which a hue point of each chromaticity diagram is depicted as a circular ring, and the MacAdam ellipse is depicted as a circle as shown in FIG. 6.

### (4) Summary

An illumination system (A1) of a first aspect of the present disclosure includes a first light source (first light source unit 1), a second light source (second light source unit 2), a first driver (3A), a second driver (3B), and a controller (4). The first light source is configured to irradiate an irradiation surface (S1) with first illumination light (L1) of a chromatic color, a quantity and a color of the first illumination light (L1) being variable. The second light source is configured to irradiate the irradiation surface (S 1) with second illumination light (L2) different from the first illumination light (L1), a quantity and a color of the second illumination light (L2) being variable. The first driver (3A) is configured to drive the first light source such that the quantity and the color of the first illumination light (L1) respectively match a first light quantity target value and a first light color target value. The second driver (3B) is configured to drive the second light source such that the quantity and the color of the second illumination light (L2) respectively match a second light quantity target value and a second light color target value. The controller (4) is configured to give the first light quantity target value and the first light color target value to the first driver (3A) and give the second light quantity target value and the second light color target value to the second driver (3B). The first light source and the second light source are configured such that at least part of an irradiation range (F1) of the first illumination light (L1) overlaps an irradiation range (F2) of the second illumination light (L2) on the irradiation surface (S1). A chromaticity of the first illumination light (L1) is apart from a chromaticity of an equi-energy white point by more than or equal to 50 steps in a MacAdam ellipse.

The illumination system (A1) of the first aspect enables gradation rendering illumination of colors with increased vividness to be implemented as compared with the conventional example in which illumination light of an achromatic or low-chromatic color (light color) is used.

An illumination system (A1) of a second aspect of the present disclosure may be implemented in combination with the first aspect. In the illumination system (A1) of the second aspect, a luminous intensity distribution characteristic of the first light source is preferably narrow-angled with respect to a luminous intensity distribution characteristic of the second light source. On the irradiation surface (S1), part of the irradiation range (F2) of the second illumination light (L2) is preferably closer to the first light source and the second light source than the irradiation range (F1) of the first illumination light (L1) is.

In the illumination system (A1) of the second aspect, part of the irradiation range (F2) of the second illumination light (L2) on the irradiation surface (S1) is closer to the first light source and the second light source than the irradiation range (F1) of the first illumination light (L1) is, thereby increasing the range of gradation illumination on the irradiation surface (S1).

An illumination system (A1) of a third aspect of the present disclosure may be implemented in combination with the second aspect. In the illumination system (A1) of the third aspect, a first main irradiation range (F11) in which an illuminance is higher than or equal to 30% when a maximum illuminance is 100% in the irradiation range (F1) of the first illumination light (L1) preferably overlaps at least part of a second main irradiation range (F22) in which an illuminance is higher than or equal to 30% when a maximum illuminance is 100% in the irradiation range (F2) of the second illumination light (L2).

In the illumination system (A1) of the third aspect, the first main irradiation range (F11) of the first light source and the second main irradiation range (F22) of the second light source at least partially overlap each other, and thereby, a peak of the first illumination light (L1) and a peak of the second illumination light (L2) on the irradiation surface (S1) are easily recognized as one peak. As a result, the illumination system (A1) enables a visual quality of gradation illumination on the irradiation surface (S1) to be improved as compared with the case where the peak of the first illumination light (L1) and the peak of the second illumination light (L2) on the irradiation surface (S1) are separately recognized.

An illumination system (A1) of a fourth aspect of the present disclosure may be implemented in combination with the second or third aspect. In the illumination system (A1) of the fourth aspect, the chromaticity of the second illumination light (L2) preferably matches a chromaticity on a virtual line segment (G1) in a chromaticity diagram. The virtual line segment (G1) is a line segment connecting the chromaticity of the first illumination light (L1) and an arbitrary chromaticity of the second illumination light (L2) to each other and is preferably apart from the chromaticity of the equi-energy white point by more than or equal to 25 steps in the MacAdam ellipse.

The illumination system (A1) of the fourth aspect causes a chromaticity point on the line segment (G1) displayed on the chromaticity diagram to be selected, thereby causing an observer to feel a sense of gradation with continuous chromaticness by the gradation illumination on the irradiation surface (S 1).

An illumination system (A1) of a fifth aspect of the present disclosure may be implemented in combination with any one of the second to fourth aspects. In the illumination system (A1) according to the fifth aspect, the controller (4) preferably coordinates the second light quantity target value and the second light color target value with each other which are to be given to the second driver (3B).

The illumination system (A1) of the fifth aspect coordinates the second light quantity target value and the second light color target value which are to be given from the controller (4) to the second driver (3B) with each other, thereby enhancing the workability of setting work of the second light quantity target value and the second light color target value.

An illumination system (A1) of a sixth aspect of the present disclosure may be implemented in combination with the second to fifth aspects. In the illumination system (A1) according to the sixth aspect, the controller (4) preferably determines the second light quantity target value to be given to the second driver (3B) in accordance with a color difference between the second light color target value to be given to the second driver (3B) and the first light color target value.

In the illumination system (A1) of the sixth aspect, the controller (4) determines, based on the color difference between the second light color target value to be given to the second driver (3B) and the first light color target value, the second light quantity target value to be given to the second driver (3B), thereby easily implementing gradation illumination according to the color difference.

An illumination system (A1) of a seventh aspect of the present disclosure may be implemented in combination with the sixth aspect. In the illumination system (A1) of the seventh aspect, the controller (4) preferably increases the second light quantity target value as the color difference increases.

The illumination system (A1) of the seventh aspect increases the second light quantity target value as the color difference increases, thereby implementing gradation illumination which causes the chromaticness of the color of the first illumination light (L1) and the chromaticness of the color of the second illumination light (L2) to be strongly perceived. In contrast, the illumination system (A1) of the seventh aspect reduces the second light quantity target value as the color difference decreases, thereby implementing gradation illumination which causes the chromaticness of the first illumination light (L1) to be strongly perceived.

An illumination system (A1) of an eighth aspect of the present disclosure may be implemented in combination with any one of the second to seventh aspects. The illumination system (A1) of the eighth aspect preferably further includes an input receiver (5) configured to receive an input which specifies the first light quantity target value and the first light color target value. The controller (4) preferably gives the first light quantity target value and the first light color target value specified by the input received by the input receiver (5) to the first driver (3A). The controller (4) preferably gives, to the second driver (3B), the second light quantity target value and the second light color target value respectively corresponding to the first light quantity target value and the first light color target value which are to be given to the first driver (3A).

In the illumination system (A1) of the eighth aspect, the controller (4) gives, to the second driver (3B), the second light quantity target value and the second light color target value respectively corresponding to the first light quantity target value and the first light color target value received by the input receiver (5), and therefore, work for causing the input receiver (5) to receive an input to specify the second light quantity target value and the second light color target value is no longer required, thereby enhancing the workability of setting work.

### Reference Signs List

- A1: Illumination System
- 1: First Light Source Unit (First Light Source)
- 2: Second Light Source Unit (Second Light Source)
- 3A: First Driver
- 3B: Second Driver
- 4: Controller
- 5: Input Receiver
- L1: First Illumination Light
- L2: Second Illumination Light
- S1: Irradiation Surface
- F 1: Irradiation Range of First Illumination Light
- F2: Irradiation Range of Second Illumination Light
- G1: Virtual Line Segment
- F11: First Main Irradiation Range
- F22: Second Main Irradiation Range

## Claims

1. An illumination system comprising:
a first light source configured to irradiate an irradiation surface with first illumination light of a chromatic color, a quantity and a color of the first illumination light being variable;
a second light source configured to irradiate the irradiation surface with second illumination light different from the first illumination light, a quantity and a color of the second illumination light being variable;
a first driver configured to drive the first light source such that the quantity and the color of the first illumination light respectively match a first light quantity target value and a first light color target value;
a second driver configured to drive the second light source such that the quantity and the color of the second illumination light respectively match a second light quantity target value and a second light color target value; and
a controller configured to
give the first light quantity target value and the first light color target value to the first driver and
give the second light quantity target value and the second light color target value to the second driver,
the first light source and the second light source being configured such that at least part of an irradiation range of the first illumination light overlaps an irradiation range of the second illumination light on the irradiation surface,
a chromaticity of the first illumination light being apart from a chromaticity of an equi-energy white point by more than or equal to 50 steps in a MacAdam ellipse.

2. The illumination system of claim 1, wherein
a luminous intensity distribution characteristic of the first light source is narrow-angled with respect to a luminous intensity distribution characteristic of the second light source, and
on the irradiation surface, part of the irradiation range of the second illumination light is closer to the first light source and the second light source than the irradiation range of the first illumination light is.

3. The illumination system of claim 2, wherein
a first main irradiation range in which an illuminance is higher than or equal to 30% when a maximum illuminance is 100% in the irradiation range of the first illumination light overlaps at least part of a second main irradiation range in which an illuminance is higher than or equal to 30% when a maximum illuminance is 100% in the irradiation range of the second illumination light.

4. The illumination system of claim 2 or 3, wherein
a chromaticity of the second illumination light matches a chromaticity on a virtual line segment in a chromaticity diagram, and
the virtual line segment is a line segment connecting the chromaticity of the first illumination light and an arbitrary chromaticity of the second illumination light to each other and is apart from the chromaticity of the equi-energy white point by more than or equal to 25 steps in the MacAdam ellipse.

5. The illumination system of any one of claims 2 to 4, wherein
the controller is configured to coordinate the second light quantity target value and the second light color target value with each other which are to be given to the second driver.

6. The illumination system of any one of claims 2 to 5, wherein
the controller is configured to determine the second light quantity target value to be given to the second driver in accordance with a color difference between the second light color target value to be given to the second driver and the first light color target value.

7. The illumination system of claim 6, wherein
the controller is configured to increase the second light quantity target value as the color difference increases.

8. The illumination system of any one of claims 2 to 7, further comprising an input receiver configured to receive an input which specifies the first light quantity target value and the first light color target value, wherein
the controller is configured to
give the first light quantity target value and the first light color target value specified by the input received by the input receiver to the first driver and
give, to the second driver, the second light quantity target value and the second light color target value respectively corresponding to the first light quantity target value and the first light color target value which are to be given to the first driver.

## Amended claims

Statement under Art. 19.1 PCT
1. deleted

2. An illumination system comprising:
a first light source configured to irradiate an irradiation surface with first illumination light of a chromatic color, a quantity and a color of the first illumination light being variable;
a second light source configured to irradiate the irradiation surface with second illumination light different from the first illumination light, a quantity and a color of the second illumination light being variable;
a first driver configured to drive the first light source such that the quantity and the color of the first illumination light respectively match a first light quantity target value and a first light color target value;
a second driver configured to drive the second light source such that the quantity and the color of the second illumination light respectively match a second light quantity target value and a second light color target value; and
a controller configured to
   give the first light quantity target value and the first light color target value to the first driver and
   give the second light quantity target value and the second light color target value to the second driver,
the first light source and the second light source being configured such that at least part of an irradiation range of the first illumination light overlaps an irradiation range of the second illumination light on the irradiation surface,
a chromaticity of the first illumination light being apart from a chromaticity of an equi-energy white point by more than or equal to 50 steps in a MacAdam ellipse,
a luminous intensity distribution characteristic of the first light source being narrow-angled with respect to a luminous intensity distribution characteristic of the second light source, and
on the irradiation surface, part of the irradiation range of the second illumination light being closer to the first light source and the second light source than the irradiation range of the first illumination light is.

3. The illumination system of claim 2, wherein
 a first main irradiation range in which an illuminance is higher than or equal to 30% when a maximum illuminance is 100% in the irradiation range of the first illumination light overlaps at least part of a second main irradiation range in which an illuminance is higher than or equal to 30% when a maximum illuminance is 100% in the irradiation range of the second illumination light.

4. The illumination system of claim 2 or 3, wherein
a chromaticity of the second illumination light matches a chromaticity on a virtual line segment in a chromaticity diagram, and
the virtual line segment is a line segment connecting the chromaticity of the first illumination light and an arbitrary chromaticity of the second illumination light to each other and is apart from the chromaticity of the equi-energy white point by more than or equal to 25 steps in the MacAdam ellipse.

5. The illumination system of any one of claims 2 to 4, wherein
 the controller is configured to coordinate the second light quantity target value and the second light color target value with each other which are to be given to the second driver.

6. The illumination system of any one of claims 2 to 5, wherein
 the controller is configured to determine the second light quantity target value to be given to the second driver in accordance with a color difference between the second light color target value to be given to the second driver and the first light color target value.

7. The illumination system of claim 6, wherein
 the controller is configured to increase the second light quantity target value as the color difference increases.

8. The illumination system of any one of claims 2 to 7, further comprising an input receiver configured to receive an input which specifies the first light quantity target value and the first light color target value, wherein
 the controller is configured to
give the first light quantity target value and the first light color target value specified by the input received by the input receiver to the first driver and
give, to the second driver, the second light quantity target value and the second light color target value respectively corresponding to the first light quantity target value and the first light color target value which are to be given to the first driver.
